# EUROPEAN PATENT SPECIFICATION

(11) **EP 4 375 128 B1**
(45) Date of publication and mention of the grant of the patent: **02.09.2026**
(21) Application number: 22845396.5
(22) Date of filing: 21.07.2022
(51) Int. Cl.: B60L 53/66, B60L 53/18, B60L 53/14, B60L 53/62, B60L 53/60, H02J 7/02

(54) **ADAPTER CONTROL APPARATUS AND METHOD, ADAPTER, AND CHARGING SYSTEM**
ADAPTERSTEUERUNGSVORRICHTUNG UND -VERFAHREN, ADAPTER UND LADESYSTEM
APPAREIL ET PROCÉDÉ DE COMMANDE D'ADAPTATEUR, ADAPTATEUR ET SYSTÈME DE CHARGE

(30) Priority: 23.07.2021 CN 202110839623
(43) Date of publication of application: 29.05.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/107013
(87) International publication number: WO 2023/001232

(56) References cited:
- WO-A2-2010/117594
- WO-A2-2012/139778
- WO-A2-2012/139778
- CN-A- 101 803 143
- CN-A- 102 132 468
- CN-A- 104 685 982
- CN-A- 107 554 318
- CN-A- 113 352 929
- JP-A- 2000 050 522
- US-A1- 2009 167 537
- US-A1- 2014 203 777
- US-A1- 2016 137 082
- MARC MÜLTIN: "How does ISO 15118 support vehicle-to-grid (V2G)?", SWITCH, 24 April 2019 (2019-04-24), pages 1 - 13, XP093157602, Retrieved from the Internet <URL:https://www.switch-ev.com/blog/how-iso15118-supports-vehicle-to-grid>

## Description

The present disclosure claims priority to Chinese Patent Application No. 202110839623.8, entitled "ADAPTER CONTROL APPARATUS AND METHOD, ADAPTER, AND CHARGING SYSTEM" as filed on July 23, 2021.

### TECHNICAL FIELD

The present disclosure relates to the technical field of electric vehicles, in particular to an adapter control apparatus and method, adapter, and charging system.

### BACKGROUND

In order to solve the increasingly prominent energy crisis and environmental pollution problems, new energy vehicles have become a main strategy for the development in various regions, whereas a major challenge for new energy vehicles lies in endurance of vehicles and charging capacity, thus a research on vehicle charging system has become an important hotspot at present. In the process of researching different charging systems, forward compatibility issues may be encountered. A user may encounter issues of using a direct current such as charging pile GB2015 to charge different vehicles. An adapter needs to be designed due to different shapes of an interface at both ends, to connect a vehicle and a charger. An existing adapter is only a mechanical device with current transmission. In the charging process, a current is adjusted by a battery management system (BMS) of the vehicle. Specifically, the vehicle directly communicates with the charging pile, an output current of the charging pile is adjusted by an information interaction between the vehicle and the charging pile, however, a fire hazard may arise due to a current carrying capacity of the adapter is not taken into account during charging, thereby creating a greater potential safety hazard. Therefore, how to improve the safety performance of new energy vehicles during charging has become a technical problem that needs to be solved urgently. An EVSE doubler add-on unit is known in the prior art, e.g. US2016/137082A1. Improvements in electrical connections are known in the prior art, e.g. WO2012/139778A2. An electric vehicle supply equipment with temperature controlled current is known in the prior art, e.g. US2014/203777A1.

### SUMMARY

The present invention is defined by the independent claims. Further embodiments are set forth in the dependent claims. Any references to inventions or embodiments not falling within the scope of the independent claims are to be interpreted as examples useful for understanding the invention. In view of the above problem in the prior art, an objective of the present disclosure is to provide an adapter control apparatus and method, an adapter and a charging system that improves the safety of new energy vehicles during charging.

In order to solve the above technical problem, the present disclosure provides technical solutions as follows: on the one hand, the present disclosure provides a control apparatus for an adapter.

On the other hand, the present disclosure also provides a method of controlling an adapter. On the other hand, the present disclosure also provides an adapter, including: a current conversion device and the control apparatus for the adapter.

Finally, the present disclosure also provides a charging system.

By adopting the technical solutions, the present disclosure describes an adapter control apparatus and an adapter control method, an adapter and a charging system. The control apparatus including: a communication module and a control module, the communication module is configured to transmit a message between a charger and a vehicle, and the control module is configured to parse and acquire an output current range of the charger when receiving an output capability message of the charger sent by the charger, and send a corresponding message to the vehicle base on a rated current of an adapter and the output current range, so that the vehicle sends a feedback message to the charger based on the received message and an own configuration parameter. The present disclosure improves the use safety of the adapter by providing the control apparatus configured to protect the adapter according to the rated current of the adapter itself, thereby improving the safety and reliability of new energy vehicles during charging.

In order to make the above and other objectives, features and advantages herein more apparent and understandable, embodiments are described in detail below together with the accompanying drawings.

### BRIEF DESCRIPTION OF THE DRAWINGS

In order to more clearly illustrate the technical solutions in the embodiments of the present disclosure or the prior art, drawings to be used in the description of embodiments or the prior art will be simply introduced below. Obviously, the drawings in the description below are only some embodiments of the present disclosure, and other drawings may also be obtained by those skilled in the art based on these drawings without making creative efforts.
FIG. 1 is a structural diagram illustrating a control apparatus for an adapter provided in an embodiment of the present disclosure;
FIG. 2 is another structural diagram illustrating the control apparatus for the adapter provided in an embodiment of the present disclosure;
FIG. 3 is another structural diagram illustrating the control apparatus for the adapter provided in an embodiment of the present disclosure;
FIG. 4 is a schematic diagram illustrating steps of a method of controlling an adapter provided in an embodiment of the present disclosure;
FIG. 5 is a schematic diagram illustrating steps of a comparing process of a rated current in an embodiment of the present disclosure;
FIG. 6 is a schematic diagram illustrating a workflow of an adapter in an embodiment of the present disclosure; and
FIG. 7 is a schematic diagram illustrating a computer device provided in an embodiment of the present disclosure.

### Listing of reference signs

10: control apparatus; 20: charger; 30: vehicle; 40: adapter; 11: communication module; 12: control module; 13: temperature detection module; 111: first communication unit; 112: second communication unit; 702: computer device; 704: processor; 706: memory; 708: drive mechanism; 710: input/output module; 712: input device; 714: output device; 716: display device; 718: graphical user interface; 720: network interface; 722: communication link; 724: communication bus.

### DETAILED DESCRIPTION

The technical solutions in the embodiments of the present disclosure are described clearly and integrally in combination with the drawings in the embodiments of the present disclosure, and obviously, the described embodiments are merely part of the embodiments, not all of the embodiments of the present disclosure. Based on the embodiments of the present disclosure, all the other embodiments obtained by those skilled in the art without making creative efforts fall within the protection scope of the present disclosure.

It should be noted that the terms "first", "second" in the disclosure and claims and the drawings of the present disclosure are used to distinguish similar objects and are not necessarily used to describe a specific order or sequence. It should be understood that the data used in this way may be interchanged under appropriate circumstances, so that the embodiments illustrated herein may be implemented in sequences other than those illustrated or described herein. In addition, the terms "including" and "comprising" and any variations thereof are intended to cover non-exclusive inclusions, for example, a process, a method, an apparatus, a product, or an equipment that includes a series of steps or units do not be limited to those steps or units clearly listed, but may include other steps or units that are not clearly listed or inherent to this process, method, product, or equipment.

In the charging process of new energy vehicles, a current output from a charger (or charging pile) needs to be converted (e.g., alternating current to direct current) by an adapter and then output to a battery of a vehicle to realize charging of a vehicle. An existing adapter is a mechanical device only with function of current transmission. In the charging process, the current is adjusted by a battery management system (BMS) of a vehicle. Specifically, the vehicle directly communicates with the charging pile, an output current of the charging pile is adjusted by an information interaction between the vehicle and the charging pile, however, a fire hazard may arise due to a current carrying capacity of the adapter is not taken into account during charging, thereby creating a greater potential safety hazard.

In order to solve the problem, an embodiment of the present disclosure provides a control apparatus for an adapter, which sends corresponding control information to a vehicle in combination with a maximum carrying current of an adapter itself, so as to avoid an excessive current output from a charger from affecting a normal operation of the adapter.

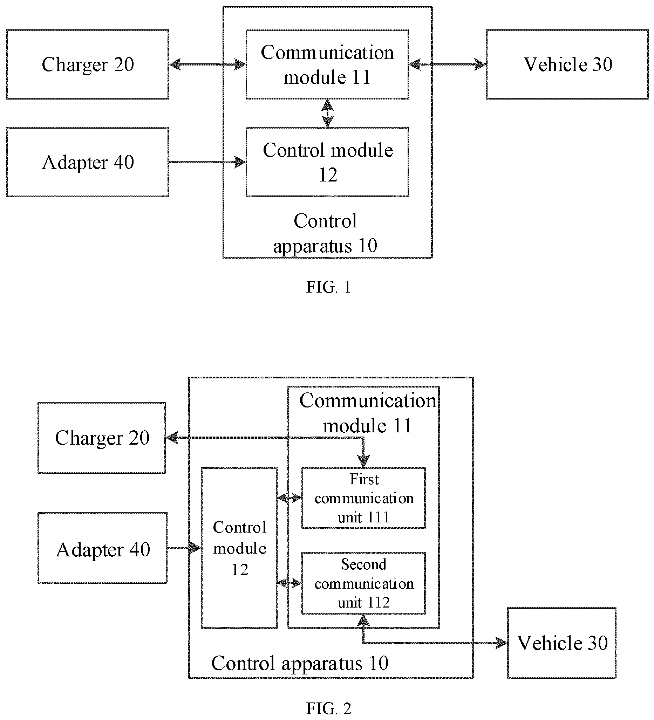

Specifically, as illustrated in FIG. 1, the control apparatus 10 includes: a communication module 11 and a control module 12. The communication module 11 is configured to transmit a message between a charger 20 and a vehicle 30. Charging current information is obtained through forwarding the message between the charger 20 and the vehicle 30, so that the output current is obtained in real time.

The control module 12 is configured to parse and acquire an output current range of the charger 20 when receiving an output capability message of the charger sent by the charger 20, and send a corresponding message to the vehicle 30 base on a rated current of an adapter 40 and the output current range, so that the vehicle 30 sends a feedback message to the charger 20 based on the received message and an own configuration parameter.

It can be understood that the output capability message (such as a CML message) sent by the charger 20 is obtained in real time by providing the control apparatus 10 herein, and the output current range of the charger 20 is obtained through the output capability message, so as to determine a relationship between the rated current of the adapter 40 and the output current range, and thus the output capability message is alternatively adjusted, so that the output current range in the output capability message obtained by the vehicle 30 falls within the rated current range, thereby preventing the adapter 40 from operating in a high-current environment, avoiding an occurrence of high-temperature fires, and improving the safety of charging.

The rated current of the adapter 40 may be a maximum withstand current of the adapter 40, i.e., a safe current value. The adapter 40 operates normally in a current environment below the safe current value, and a continuous operation may not result in overheating. The rated current is determined by a terminal and materials of the adapter 40. In an embodiment of the present disclosure, the rated current of the adapter 40 is a given value and the rated current of different adapters 40 is different.

The communication module 11 may be a CAN (Controller Area Network) communication module, implements forwarding of message data, e.g., the CAN communication module receives the message data sent by the charger 20 and converts the message data into a CAN level signal and sends to the control module 12, the control module 12 processes the received level signal, and then converts into corresponding message data, and the corresponding message data is forwarded by the CAN communication module to the vehicle 30. A similar processing is also performed on the message data sent by the vehicle 30, which will not be described.

The control module 12 may include a micro-control unit with a certain computing processing capability, such as an MCU module, achieves a corresponding purpose by storing processing logics and triggering an operation of the processing logic when receiving corresponding data. Alternatively, the control module 12 may be a single-chip microcomputer, chips integrated by a plurality of I/O interface, or the like.

In a further embodiment, the control module 12 includes a first judgment unit, of which the operation principle may involve:
judging whether the received message is an output capability message;
if so, parsing and acquiring output current information in the output capability message; and
if not, directly forwarding, by the communication module 11, the received message to the vehicle 30.

Therefore, in the present disclosure, the communication efficiency between the charger 20 and the vehicle 30 is ensured by directly forwarding a message in addition to the output capability message, and the output capability message may be parsed based on pre-set message parsing rules, e.g., a method of parsing a message is obtained based on a method of generating a message in a communication protocol specified in advance, and since different messages are different in terms of data format and content, whether the message is the output capability message is determined based on message format and content. In addition, message encapsulated by different communication protocols are in different formats.

The output current range includes: a minimum output current and a maximum output current;
the sending a corresponding message to the vehicle 30 based on a rated current of an adapter 40 and output current range includes:
sending, by the communication module 11, a charging stop message to the vehicle 30, when the rated current is smaller than the minimum output current; and
adjusting the output capability message of the charger 20, when the rated current is smaller than the maximum output current and greater than the minimum output current, and sending, by the communication module 11, the adjusted output capability message of the charger 20 to the vehicle 30, and the maximum output current in the adjusted output capability message of the charger 20 does not exceed the rated current.

It can be understood that the output capability message sent by the charger 20 to the vehicle 30 is maximum and minimum values of the output current, so that the battery management system (BMS) of the vehicle 30 determines whether the output current falls within the received range of the battery of the vehicle 30, thereby protecting the battery of the vehicle 30. Before the output capability message is transmitted to the vehicle 30, the control apparatus 10 for the adapter 40 properly adjusts the output capability message, so that the output current of the charger 20 may not cause additional damage to the adapter 40, thereby protecting the adapter 40 and improving the charging experience.

In practice, the charger 20 may continuously send the output capability message to the vehicle 30 according to a specified frequency, thus the control module 12 selectively adjusts the output capability message based on the received output capability message in combination with the rated current of the adapter 40, so as to ensure that the message data received by the vehicle 30 are all processed data. When receiving the output capability message sent by the communication module 11, the vehicle 30 may send a feedback message to the charger 20 based on preset feedback rules in combination with an own configuration parameter (such as battery current carrying capacity), so that the charger 20 outputs the current based on the received feedback message. The feedback message is an output current message sent by the BMS of the vehicle to the charger 20.

In some other embodiments, the control module 12 includes: a second judgment module, of which the operation principle can involve:
judging whether the rated current is smaller than the minimum output current;
if so, it indicates that the minimum current that the charger 20 can output is too large, and has exceeded the maximum capacity that the adapter 40 can withstand, thus it indicates that the charger 20 is not suitable for charging at this time, then sending, by the communication module 11, a charging stop message to the vehicle 30, so that the vehicle 30 sends a BST (Battery STop) stop message to the charger 20; and
if not, continuing to judge whether the rated current is smaller than the maximum output current;
if the rated current is not smaller than the maximum output current, which indicates that the output of the charger 20 may not affect the adapter 40, directly forwarding the output capability message to the vehicle 30;
if the rated current is smaller than the maximum output current, which indicates that the adapter 40 may be adversely affected when the charger 20 outputs a current greater than the rated current and adjusting the output capability message of the charger 20 is needed, sending, by the communication module 11, the adjusted output capability message of the charger 20 to the vehicle 30, and the maximum output current in the adjusted output capability message of the charger 20 does not exceed the rated current.

Optionally, the maximum output current in the adjusted output capability message of the charger is equal to the rated current, thus a higher output current of the charger 20 is ensured, the charging efficiency is improved, and the experience of using car is improved.

In an embodiment of the present disclosure, in order to ensure the transmission efficiency of messages and avoid transmission congestion, as illustrated in FIG. 2, the communication module 11 includes: a first communication unit 111 and a second communication unit 112;
the first communication unit 111 is electrically connected to the charger 20, and the first communication unit 111 is configured to receive message information transmitted by the charger 20 and send the message information to the control module 12;
the control module 12 is also configured to determine whether the message information is the output capability message of the charger 20;
if so, perform parsing of the message information and subsequent steps, and send, by the second communication unit 112, a corresponding message to the vehicle 30; and
if not, send, by the second communication unit 112, the received message information to the vehicle 30.

Separate connection and communication with the charger 20 and the vehicle 30 is realized by providing a first communication unit 111 and a second communication unit 112, which ensures that a data processing volume of a single communication unit (such as the first communication unit 111 or the second communication unit 112) is reduced, and improves the efficiency of data conversion and transmission.

It should be noted that the provision of the first communication unit 111 and the second communication unit 112 is an implementation of an embodiment of the present disclosure.

In an embodiment of the present disclosure, the control apparatus 10 may be a hardware equipment with some physical structure and capable of implementing the functional modules, and thus may be provided independently and maintain a communication connection with the charger 20, the adapter 40 and the vehicle 30. Further, the control apparatus 10 is mounted on the adapter 40, e.g., the control apparatus 10 is disposed inside the adapter 40, and the control apparatus 10 may be configured as a part of the adapter 40, so that the functions of the adapter 40 may be enriched, the communication function of the adapter 40 is increased, the adapter 40 protect itself by the own control module 12, thereby improving the application scope of the adapter 40.

In some other embodiments, the control apparatus 10 is configured on the vehicle 30, the control apparatus 10 may establish a communication link with the BMS of the vehicle, and acquire and save the rated current of the adapter 40 in advance, so as to realize the functions. For another example, the control apparatus 10 may also be provided on the charger 20, so that in practice, the message sent by the charger 20 is actually forwarded to the vehicle 30 by the control apparatus 10, thereby realizing data exchange between the charger 20 and the vehicles 30.

It should be noted that when the control apparatus 10 is provided in the vehicle 30, the functions of the control apparatus 10 can be integrated into the BMS of the vehicle, i.e., the BMS of the vehicle adds the corresponding functions of the control apparatus 10, and achieves the protection of the adapter 40, so that the functions is realized only by adding a software logic, the supplementary of hardware equipment is avoided as much as possible, and the equipment supplementary cost and the modification cost are reduced.

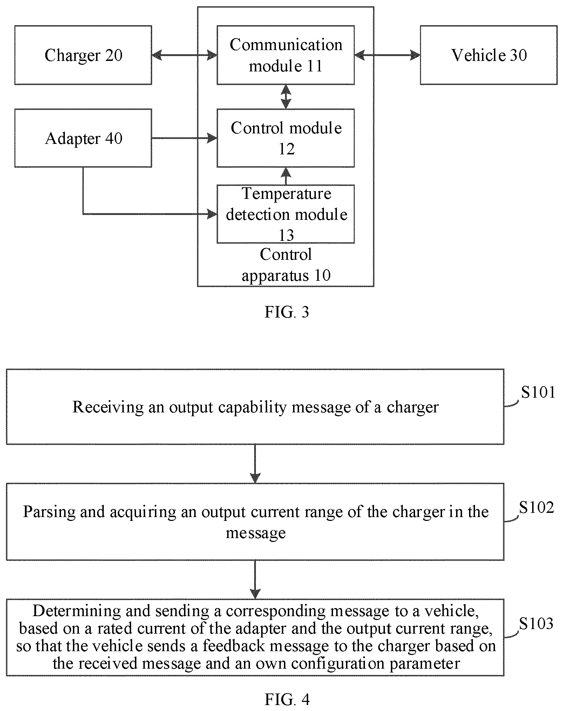

In a further embodiment, when the control apparatus 10 is mounted on the adapter 40, as illustrated in FIG. 3, the control apparatus 10 further includes a temperature detection module 13;
the temperature detection module 13 is configured to collect an operation temperature of an adapter terminal, and send the collected temperature data to the control module 12;
the control module 12 is further configured to compare the temperature data with a preset threshold value, and send a corresponding message to the vehicle 30 based on a comparison result.

It can be understood that the adapter 40 may be further protected by disposing the temperature detection module 13 on the adapter 40, to avoid overheating from affecting the operation efficiency, or even serious situations such as fire, and the temperature detection module 13 may be a temperature sensor to collect terminal temperatures (DC+ and DC-) of the adapter 40.

The preset threshold value includes: a first threshold value and a second threshold value, and the first threshold value is smaller than the second threshold value;
the sending a corresponding message to the vehicle 30 based on a comparison result includes:
adjusting the output capability message of the charger 20, when the temperature data is between the first threshold value and the second threshold value, and sending, by the communication module 11, the adjusted output capability message of the charger 20 to the vehicle 30, and the maximum output current in the adjusted output capability message of the charger 20 is a preset current;
sending, by the communication module 11, a charging stop message to the vehicle 30, when the temperature data is greater than the second threshold value.

The first threshold value may be understood as a boundary value of the adapter 40 to operate normally, and the second threshold value may be understood as a limit value of the adapter 40 in a safe state, so when the temperature of the adapter 40 exceeds the first threshold value and is smaller than the second threshold value, this means that the adapter 40 is no longer within the normal range and needs to be cooled down; when the temperature of the adapter 40 exceeds the second threshold value, this means that the adapter 40 is in a dangerous state, and should be immediately stopped from operation to escape danger. The first threshold value and the second threshold value are determined based on an actual design of the adapter 40, such as structure, material, power of the adapter 40.

The preset current may be understood as a derated current value. A currently higher current leads to a higher temperature of the adapter 40, so current derating is required to realize a decrease in the temperature of the adapter 40. In practice, the preset current is not a fixed value, and may be determined according to an actual current and the state of the adapter. Alternatively, derating processing rules may be set according to an actual situation, e.g., the currently charging current may be reduced in an equal value according to a specified gradient. When the temperature of the adapter 40 is not significantly reduced or is higher than the first threshold value within a specified period of time, the reduction value may be increased to improve the cooling efficiency for the adapter 40.

In some other embodiments, there may also be other derating processing rules, e.g., at an equal rate. According to the currently charging current, a specified ratio (such as 10%, 20%) is each time reduced as a preset current. Of course, there are also other derating processing rules, and the preset current may also be a fixed value.

In an embodiment of the present disclosure, when the control apparatus 10 is disposed in the adapter 40, the adjustment of the received output capability message may be processed simultaneously based on the rated current and temperature data, and the best result after processing is sent to the vehicle 30, for example:
1) when the rated current is smaller than the minimum output current, or the temperature data of the adapter is greater than the second threshold value:
   regardless of other data, the control module 12 sends a charging stop message to the vehicle 30; and
2) when the rated current is between the minimum output current and the maximum output current, and the temperature data of the adapter 40 is between the first threshold value and the second threshold value:
   the preset current obtained by the derating process is firstly determined;
   the rated current is compared with the preset current, in which the smaller value is used as the maximum output current in the output capability message.

In this way, not only the relationship between the output current of the charger 20 and the rated current is considered, but also the influence of the temperature data of the adapter 40 on the operation of the adapter 40 is considered, in order to realize comprehensive control and improve the reliability of the adapter 40.

In some other embodiments, the control apparatus 10 may also include a power module, the power module is electrically connected to an auxiliary power supply of the charger 20, and the power module is configured to charge other functional modules (such as the communication module 11, the control module 12, and the temperature detection module 13 and so on) in the control apparatus 10, alternatively, the modules may be powered by a low voltage environment (12V converted to 5V) through voltage conversion.

Based on the same inventive concept, an embodiment of the present disclosure also provides a method of controlling an adapter that improves the operation safety and reliability of the adapter 40. FIG. 4 is a schematic diagram illustrating steps of a method of controlling an adapter provided in an embodiment of the present disclosure. The present disclosure provides operational steps of the method in the embodiment or flowchart, but may include more or less operational steps based on conventional or non-creative efforts. The sequence of steps listed in the embodiments is only one of a plurality of sequences in which steps are performed, and does not represent a unique execution sequence. When the system or device product is executed in practice, the methods shown in the embodiments or drawings may be executed sequentially or in parallel. Specifically, as illustrated in FIG. 4, the method may include:
S101: receiving an output capability message of a charger;
S102: parsing and acquiring an output current range of the charger in the message; and
S103: determining and sending a corresponding message to the vehicle based on a rated current of the adapter and the output current range.

It can be understood that the method provided herein may obtain the output capability message (such as a CML message) sent by the charger 20 in real time, and obtain the output current range of the charger 20 through the output capability message, so as to determine a relationship between the rated current of the adapter 40 and the output current range, and thus alternatively adjust the output capability message, so that the output current range in the output capability message obtained by the vehicle 30 falls within the rated current range, thereby preventing the adapter 40 from operating in a high-current environment, avoiding an occurrence of high-temperature fires, and improving the safety of charging.

Before operating, the adapter 40 also performs a self-inspection to inspect whether the functional modules (such as the communication module 11, the control module 12 and the temperature detection module 13) in the control apparatus 10 are qualified, such as detecting whether faults such as a short circuit, an open circuit, an abnormal communication, or the like occur. In a case where a fault occurs, an alarm prompt is issued in time, so that the user replaces or repairs the adapter in time.

The output current range includes: a minimum output current and a maximum output current;
the determining a message information to the vehicle 30 based on the rated current of the adapter 40 and the output current range includes:
sending, by the communication module 11, a charging stop message to the vehicle 30, when the rated current is smaller than the minimum output current; and
adjusting the output capability message of the charger 20, when the rated current is smaller than the maximum output current and greater than the minimum output current, and sending, by the communication module 11, the adjusted output capability message of the charger 20 to the vehicle 30, and the maximum output current in the adjusted output capability message of the charger 20 does not exceed the rated current.

It can be understood that the output capability message sent by the charger 20 to the vehicle 30 is maximum and minimum values of the output current, so that the battery control system (BMS) of the vehicle determines whether the output current falls within the received range of the battery of the vehicle 30, thereby protecting the battery of the vehicle. Before the output capability message is sent to the vehicle 30, the control apparatus 10 for the adapter 40 properly adjusts the output capability message, so that the output current of the charger 20 may not cause additional damage to the adapter 40, thereby protecting the adapter 40 and improving the charging experience.

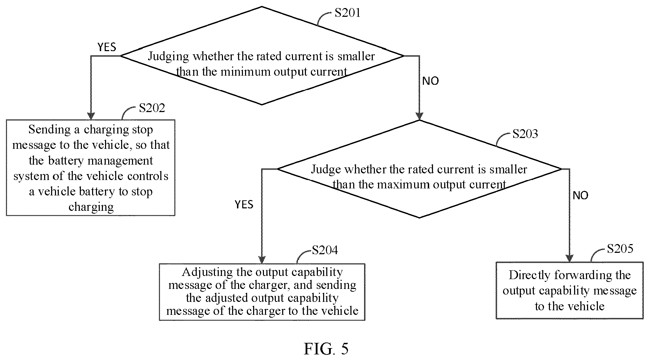

Illustratively, as illustrated in FIG. 5, the operating principle of the control apparatus 10 may involve:
S201: judging whether the rated current is smaller than the minimum output current;
S202: if so, sending a charging stop message to the vehicle, so that the battery management system of the vehicle controls a vehicle battery to stop charging;
S203: if not, continuing to judge whether the rated current is smaller than the maximum output current;
S204: if the rated current is smaller than the maximum output current and greater than the minimum output current, adjusting the output capability message of the charger, and sending the adjusted output capability message of the charger to the vehicle, and the maximum output current in the adjusted output capability message of the charger is the rated current; and
S205: if the rated current is greater than the maximum output current, directly forwarding the output capability message to the vehicle.

In order to further avoid a situation in which the temperature of the adapter 40 is too high during operation, in an embodiment of the present disclosure, the method further includes the steps of:
acquiring temperature data of an adapter terminal in real time;
adjusting the output capability message of the charger, when the temperature data is between a first threshold value and a second threshold value, and sending, by the communication module, the adjusted output capability message of the charger to the vehicle, and the maximum output current in the adjusted output capability message of the charger is a preset current, and the first threshold value is smaller than the second threshold value; and
sending, by the communication module, a charging stop message to the vehicle, when the temperature data is greater than the second threshold value.

The operation state of the adapter is monitored in real time by collecting and further processing the operation temperature of the adapter, thereby improving the operation stability and reliability of the adapter.

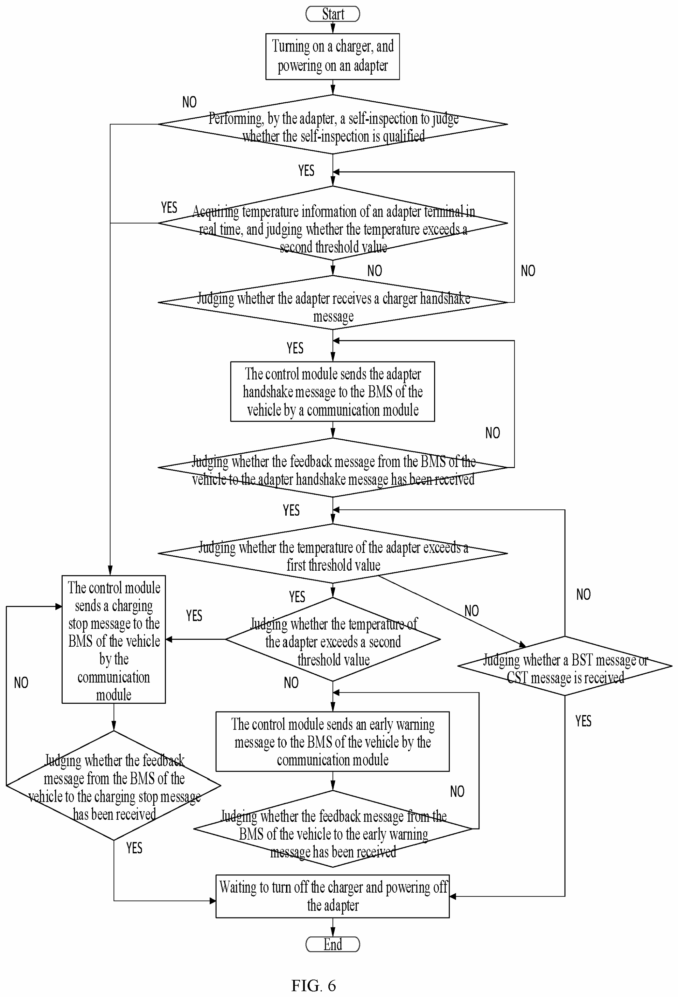

In an embodiment of the present disclosure, a method of controlling an adapter is also provided, as illustrated in FIG. 6, which is a workflow schematic diagram of the method. The method includes the steps of:
Step 1: turning on a charger after connecting a device, and powering on an adapter;
Step 2: performing, by the adapter, a self-inspection to judge whether the self-inspection is qualified, in which the self-inspection of the adapter inspects whether the communication module, control module and temperature detection module are in a normal state, such as wiring connection, communication function and control function;
Step 3: preparing for charging according to the self-inspection, when the self-inspection is qualified, acquiring temperature information of an adapter terminal in real time, and judging whether the temperature exceeds a second threshold value, to judging whether the adapter is suitable for this charging.
Step 3.1: it indicates that the adapter is not in a normal operation state and charging should be stopped, when the self-inspection of the adapter is unqualified, or the temperature of the adapter itself exceeds the second threshold value, in this case, sending, by the adapter, a charging stop message to a BMS of a vehicle as needed, so that the BMS of the vehicle controls a vehicle battery to stop charging, when the charging stop message is received;
Step 4: judging whether the adapter receives a charger handshake message, when the adapter itself is in a good operation state (for example, the temperature does not exceed the second threshold value), so as to establish communication with the BMS of the vehicle;
Step 5: sending, by a communication module, the adapter handshake message (handshake message independently generated by the adapter) to the BMS of the vehicle, when the adapter receives the charger handshake message, so that the BMS of the vehicle also determines that the adapter is involved in this charging on the basis of determination and establishment of direct communication with the charger, accordingly, it indicates that the charger has not sent the charger handshake message to the BMS of the vehicle, when the adapter has not received the charger handshake message, and then executing, by the adapter, the Step 3 in real time (or according to a specified period), to ensure that the adapter is always in a normal operation state;
Step 6: judging whether the feedback message from the BMS of the vehicle to the adapter handshake message has been received, if so, it indicates that the BMS of the vehicle has received the adapter handshake message and successfully interacted with the adapter, so that subsequent charging can be performed; accordingly, if not, resending, by the adapter, the adapter handshake message to the BMS of the vehicle as needed until the BMS of the vehicle successfully receives the message;
Step 7: charging based on charging requirements and the condition of the adapter itself after the BMS of the vehicle respectively establishes communication with the charger and the adapter, in the charging process, collecting a temperature of the adapter in real time as needed and judging whether the temperature of the adapter exceeds a first threshold value, therby monitoring the operation state of the adapter in real time;
Step 8: it indicates that the adapter is in the normal operation state, when the temperature of the adapter is lower than the first threshold value; and current transmission only needs to be completed until a BST message or a CST message is received, thereby completing an entire charging process; further, monitoring the temperature of the adapter in real time when no BST message or CST message is received, to ensure that the adapter is in the normal operation state;
Step 9: it indicates that the adapter is in an abnormal state, when the temperature of the adapter exceeds the first threshold value, and further judging whether the temperature exceeds the second threshold value is needed, to judging whether the adapter is in a safe state at this time;
Step 10: it indicates that the adapter is in an unsafe state and a high degree of hazard at this time, when the temperature of the adapter exceeds the second threshold value, and charging should be stopped to ensure charging safety, and sending, by the control module, a charging stop message to the BMS of the vehicle;
Step 11: it indicates that the adapter temperature is between abnormal and safe at this time when the adapter temperature is between the first threshold value and the second threshold value, and the temperature may be lowered by adjusting an output current, thus an early warning message is sent by the communication module to the BMS of the vehicle, so that the BMS of the vehicle makes corresponding adjustments according to the early warning message, accordingly, in order to ensure that the BMS of the vehicle successfully receives the early warning message, judging, by the adapter, whether a feedback message are received from the BMS of the vehicle to the early warning message, if not, resending the message as needed until a corresponding feedback message is received; and
Step 12: it indicates that this charging process has ended, when the feedback including either a BST message or a CST message from the BMS of the vehicle to the charging stop message is received, and waiting to turn off the charger and powering off the adapter.

The embodiment of the present disclosure ensures that the adapter works in the normal operation state, improves the operation efficiency of the adapter and improves the safety of charging, through the whole process of monitoring the temperature of the adapter itself in real time.

On the basis of the adapter control apparatus and control method provided above, the embodiment of the present disclosure further provides an adapter including: the adapter control apparatus provided above and a current conversion module and.

In a further embodiment, the present disclosure also provides a charging system including: a control apparatus for the adapter, a charger 20, a vehicle 30 and an adapter, and the control apparatus may be provided on the charger 20 or on the vehicle or on the adapter.

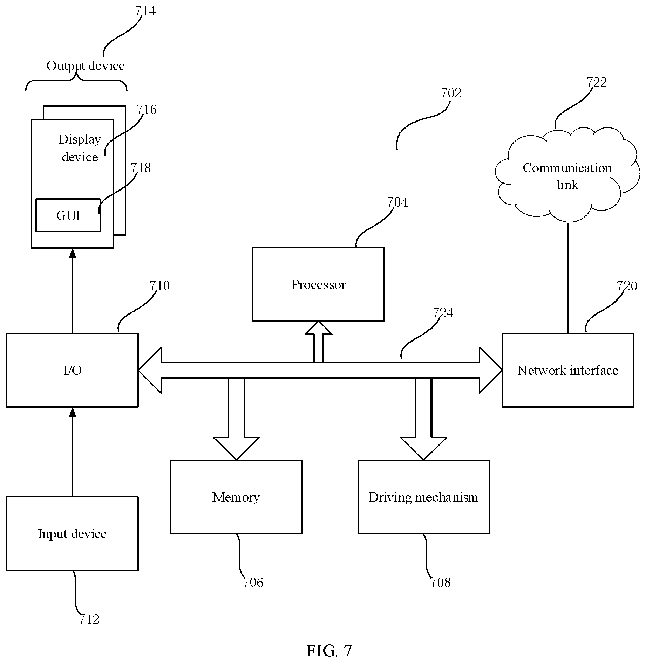

As illustrated in FIG. 7, an embodiment of the present disclosure provides a computer device, which may be actuation hardware for the control apparatus. A computer device 702 may include one or more processors 704, such as one or more central processing units (CPUs), each of which may implement one or more hardware threads. The computer device 702 may also include any memory 706 that is configured to store any type of information such as code, settings, data, or the like. Unlimitedly, for example, a memory 706 may include one or more combinations of: any type of RAM, any type of ROM, flash memory device, hard disk, optical disk, or the like. More generally, the storage resource may store information by any technology. Further, the storage resource may provide volatile or non-volatile retention for information. Further, the storage resource may represent a fixed or removable member of the computer device 702. In one case, when a processor 704 executes associated instructions stored in any one or a combination of storage resources, the computer device 702 may execute any operation of the associated instructions. The computer device 702 also includes one or more drive mechanisms 708 for interacting with any one storage resource, such as a hard disk drive, an optical disk drive, or the like.

The computer device 702 may also include an I/O module 710 (I/O) configured to receive various inputs (via an input device 712) and to provide various outputs (via an output device 714). One specific output mechanism may include a display device 716 and an associated graphical user interface (GUI) 718. In other embodiments, the I/O module 710 (I/O), the input device 712 and the output device 714 may not be included, and may only be used as a computer device in the network. The computer device 702 may also include one or more network interfaces 720 for exchanging data with other devices via one or more communication links 722. One or more communication buses 724 couple together the components described above.

The communication links 722 may be implemented in any manner, such as via a local area network, a wide area network (such as, the Internet), a point-to-point connection, or combination thereof. The communications link 722 may include any combination of a hardwired link, a wireless link, a router, a gateway function, a name server governed by any or a combination of protocols.

Corresponding to the method in FIGS. 4 to 6, an embodiment of the present disclosure also provides a computer readable storage media, on which a computer program is stored, and steps of the method are implemented when the computer program is executed by a processor.

An embodiment of this disclosure also provides a computer readable instruction, and when a processor executes the instruction, a program therein makes the processor implement the method as illustrated in FIGS. 4 to 6.

It should be understood that in various embodiments herein, a magnitude of the serial number of the processes does not mean an order of execution, and the order of execution of the processes should be determined by function and inherent logic thereof and should not constitute any limitation on the implementation process of the embodiments herein.

It should also be understood that in the embodiments herein, the term "and/or" merely describes an association relationship between associated objects and indicates that there may be three relationships. For example, A and/or B may mean that A exists alone, both A and B exist, or B exists alone. In addition, the character "/" herein generally indicates that there are an "or" relationship between the associated objects.

Those skilled in the art may appreciate that the units and algorithm steps of the examples described in conjunction with the embodiments disclosed herein may be implemented in electronic hardware, computer software, or a combination thereof. In order to clearly illustrate the interchangeability between hardware and software, composition and steps of the examples have been generally described based on functions in the description. Whether these functions are performed in hardware or software depends on specific application and design constraints of the technical solution. Those skilled in the art may adopt different methods for each specific application to implement the described functions, however, such implementation should not be considered beyond the scope of the present disclosure.

Those skilled in the art clearly appreciates that for the convenience and brevity of description, the corresponding process in the method embodiment can be referred to for the specific operation process of the system, apparatus and unit described above, which will not be repeated here anymore.

In the multiple embodiments provided herein, it should be understood that the disclosed system, apparatus and method may be implemented in other ways. For example, the apparatus embodiments described above are only illustrative. For example, a division of the units is only a logical function division. In actual implementation, there may be other division methods. For example, a plurality of units or components may be combined or integrated into another system, or some features may be ignored, or not implemented. In addition, the coupling or direct coupling or communication connection with each other shown or discussed may be indirect coupling or communication connection through some interfaces, devices or units, and may be connected electrically, mechanically or otherwise.

The units described as separate components may or may not be physically separated, and the components shown as units may or may not be physical units, that is, located in one place, or distributed over a plurality of network units. Part or all of the units is selected according to actual needs to achieve the purpose of the solutions in the embodiments herein.

In addition, the functional units in the embodiments herein may be integrated into one processing unit, or each unit may physically exist separately, or two or more units may be integrated into one unit. The integrated units may be implemented in the form of hardware or in the form of software functional units.

The integrated units may be stored in a computer-readable storage media, when realized in the form of a software function unit and sold or used as an independent product. Based on this understanding, the technical solution herein is essentially a part that makes contribution to the prior art, or all or part of the technical solution may be embodied in the form of a software product, and the computer software product is stored in a storage media including a plurality of instructions that enable a computer device (a personal computer, a server, or a network device) to execute all or part of the steps of the method in the embodiments herein. The storage media includes: a USB disk, a mobile hard disk, a read-only memory (ROM), a random access memory (RAM), a magnetic disk, an optical disk, or the like, which may store program codes.

Specific examples have been used herein to illustrate the principles and embodiments of the present disclosure. The description of the embodiments is only used to help understand the method and core concept of the present disclosure; meanwhile, for those skilled in the art, there may be changes in specific implementation and application range based on the concept of the present disclosure.

## Claims

1. A control apparatus for an adapter, comprising: a communication module (11) and a control module (12);
the communication module (11) is configured to transmit a message between a charger (20) and a vehicle (30); and
the control module (12) is configured to parse and acquire an output current range of the charger (20) when receiving an output capability message of the charger (20) sent by the charger (20), and send a corresponding message to the vehicle (30) based on a rated current of an adapter (40) and the output current range, so that the vehicle (30) sends a feedback message to the charger (20) based on the received message and an own configuration parameter, wherein the feedback message is an output current message sent by the battery management system of the vehicle (30) to the charger (20),
**characterized in that** the output current range comprises: a minimum output current and a maximum output current;
wherein the sending a corresponding message to the vehicle (30) based on a rated current of an adapter (40) and the output current range comprises:
sending, by the communication module (11), a charging stop message to the vehicle (30), when the rated current is smaller than the minimum output current; and
adjusting the output capability message of the charger (20), when the rated current is smaller than the maximum output current and greater than the minimum output current, and sending, by the communication module (11), the adjusted output capability message of the charger (20) to the vehicle (30), wherein the maximum output current in the adjusted output capability message of the charger (20) does not exceed the rated current.

2. The control apparatus for the adapter according to claim 1, wherein the communication module (11) comprises: a first communication unit (111) and a second communication unit (112);
the first communication unit (111) is electrically connected to the charger (20), and is configured to receive message information transmitted by the charger (20), and send the message information to the control module (12);
the control module (12) is also configured to determine whether the message information is the output capability message of the charger (20);
if so, perform parsing of the message information and subsequent steps, and send, by the second communication unit (112), a corresponding message to the vehicle (30); and
if not, send, by the second communication unit (112), the received message information to the vehicle (30).

3. The control apparatus for the adapter according to claim 1, wherein the control apparatus is mounted on an adapter (40).

4. The control apparatus for the adapter according to claim 1, wherein when the control apparatus (10) is mounted on the adapter (40), the control apparatus (10) further comprises a temperature detection module (13);
the temperature detection module (13) is configured to collect an operation temperature of an adapter terminal and send the collected temperature data to the control module (12); and
the control module (12) is also configured to compare the temperature data with a preset threshold value, and send a corresponding message to the vehicle (30) based on a comparison result.

5. The control apparatus for the adapter according to claim 4, wherein the preset threshold value comprises: a first threshold value and a second threshold value, and the first threshold value is smaller than the second threshold value;
the sending a corresponding message to the vehicle (30) based on a comparison result comprises:
adjusting the output capability message of the charger (20), when the temperature data is between the first threshold value and the second threshold value, and sending, by the communication module (11), the adjusted output capability message of the charger (20) to the vehicle (30), wherein the maximum output current in the adjusted output capability message of the charger (20) is a preset current; and
sending, by the communication module (11), a charging stop message to the vehicle (30), when the temperature data is greater than the second threshold value.

6. The control apparatus for the adapter according to claim 1, wherein the control apparatus (10) further comprises a power supply module configured to supply power to the communication module (11) and the control module (12).

7. A method of controlling an adapter, comprising:
receiving an output capability message of a charger (20);
parsing and acquiring an output current range of the charger (20) in the message; and
determining and sending a corresponding message to a vehicle (30), based on a rated current of the adapter (40) and the output current range, so that the vehicle (30) sends a feedback message to the charger (20) based on the received message and an own configuration parameter, wherein the feedback message is an output current message sent by the battery management system of the vehicle (30) to the charger (20),
**characterized in that** the output current range comprises: a minimum output current and a maximum output current;
wherein the determining and sending a corresponding message to the vehicle (30) based on the rated current of the adapter (40) and the output current range comprises:
sending a charging stop message to the vehicle (30), when the rated current is smaller than the minimum output current; and
adjusting the output capability message of the charger (20), when the rated current is smaller than the maximum output current and greater than the minimum output current, and sending the adjusted output capability message of the charger (20) to the vehicle (30), wherein the maximum output current in the adjusted output capability message of the charger (20) does not exceed the rated current.

8. The method of controlling the adapter according to claim 7, further comprising:
acquiring temperature data of an adapter terminal in real time;
adjusting the output capability message of the charger (20), when the temperature data is between a first threshold value and a second threshold value, and sending the adjusted output capability message of the charger (20) to the vehicle (30), wherein the maximum output current in the adjusted output capability message of the charger (20) is a preset current, and the first threshold value is smaller than the second threshold value; and
sending a charging stop message to the vehicle (30), when the temperature data is greater than the second threshold value.

9. An adapter, comprising: the control apparatus (10) for the adapter (40) according to any one of claims 1 to 6 and a current conversion device.

10. A charging system, comprising: the control apparatus (10) for the adapter (40) according to any one of claims 1 to 6, a charger (20), a vehicle (30) and an adapter (40).

## Patentansprüche

1. Steuereinrichtung für einen Adapter, die Folgendes umfasst: ein Kommunikationsmodul (11) und ein Steuerungsmodul (12);
wobei das Kommunikationsmodul (11) dazu konfiguriert ist, eine Nachricht zwischen einem Ladegerät (20) und einem Fahrzeug (30) zu übertragen; und
wobei das Steuerungsmodul (12) dazu konfiguriert ist, einen Ausgabestrombereich des Ladegeräts (20) zu parsen und zu erheben, wenn eine Ausgabefähigkeitsnachricht des Ladegeräts (20), die von dem Ladegerät (20) gesendet wird, empfangen wird, und eine entsprechende Nachricht an das Fahrzeug (30) basierend auf einem Nennstrom eines Adapters (40) und dem Ausgabestrombereich derart zu senden, dass das Fahrzeug (30) eine Rückmeldenachricht an das Ladegerät (20) basierend auf der empfangenen Nachricht und einem eigenen Konfigurationsparameter sendet, wobei die Rückmeldenachricht eine Ausgabestromnachricht ist, die von dem Batterieverwaltungssystem des Fahrzeugs (30) an das Ladegerät (20) gesendet wird,
**dadurch gekennzeichnet, dass**
der Ausgabestrombereich Folgendes umfasst: einen Mindestausgabestrom und einen Höchstausgabestrom;
wobei das Senden einer entsprechenden Nachricht an das Fahrzeug (30) basierend auf einem Nennstrom eines Adapters (40) und dem Ausgabestrombereich Folgendes umfasst:
Senden, durch das Kommunikationsmodul (11), einer Ladestoppnachricht an das Fahrzeug (30), wenn der Nennstrom kleiner als der Mindestausgabestrom ist; und
Einstellen der Ausgabefähigkeitsnachricht des Ladegeräts (20), wenn der Nennstrom kleiner als der Höchstausgabestrom und größer als der Mindestausgabestrom ist, und Senden, durch das Kommunikationsmodul (11), der eingestellten Ausgabefähigkeitsnachricht des Ladegeräts (20) an das Fahrzeug (30), wobei der Höchstausgabestrom in der eingestellten Ausgabefähigkeitsnachricht des Ladegeräts (20) den Nennstrom nicht überschreitet.

2. Steuereinrichtung für den Adapter nach Anspruch 1, wobei das Kommunikationsmodul (11) Folgendes umfasst: eine erste Kommunikationseinheit (111) und eine zweite Kommunikationseinheit (112);
wobei die erste Kommunikationseinheit (111) elektrisch mit dem Ladegerät (20) verbunden und dazu konfiguriert ist, von dem Ladegerät (20) übertragene Nachrichteninformationen zu empfangen und die Nachrichteninformationen an das Steuerungsmodul (12) zu senden;
wobei das Steuerungsmodul (12) außerdem dazu konfiguriert ist zu bestimmen, ob die Nachrichteninformationen die Ausgabefähigkeitsnachricht des Ladegeräts (20) sind;
falls ja, das Parsen der Nachrichteninformationen und die darauffolgenden Schritte durchzuführen und durch die zweite Kommunikationseinheit (112) eine entsprechende Nachricht an das Fahrzeug (30) zu senden; und
falls nicht, die empfangenen Nachrichteninformationen von der zweiten Kommunikationseinheit (112) an das Fahrzeug (30) zu senden.

3. Steuereinrichtung für den Adapter nach Anspruch 1, wobei die Steuereinrichtung auf einem Adapter (40) montiert ist.

4. Steuereinrichtung für den Adapter nach Anspruch 1, wobei, wenn die Steuereinrichtung (10) auf dem Adapter (40) montiert ist, die Steuereinrichtung (10) weiter ein Temperaturerfassungsmodul (13) umfasst;
das Temperaturerfassungsmodul (13) dazu konfiguriert ist, eine Betriebstemperatur eines Adapteranschlusses zu sammeln und die gesammelten Temperaturdaten an das Steuerungsmodul (12) zu senden; und
das Steuerungsmodul (12) außerdem dazu konfiguriert ist, die Temperaturdaten mit einem voreingestellten Schwellenwert zu vergleichen und basierend auf einem Vergleichsergebnis eine entsprechende Nachricht an das Fahrzeug (30) zu senden.

5. Steuereinrichtung für den Adapter nach Anspruch 4, wobei der voreingestellte Schwellenwert Folgendes umfasst: einen ersten Schwellenwert und einen zweiten Schwellenwert, wobei der erste Schwellenwert kleiner als der zweite Schwellenwert ist;
wobei das Senden einer entsprechenden Nachricht an das Fahrzeug (30) basierend auf einem Vergleichsergebnis Folgendes umfasst:
Einstellen der Ausgabefähigkeitsnachricht des Ladegeräts (20), wenn die Temperaturdaten zwischen dem ersten und dem zweiten Schwellenwert liegen, und Senden durch das Kommunikationsmodul (11) der eingestellten Ausgabefähigkeitsnachricht des Ladegeräts (20) an das Fahrzeug (30), wobei der Höchstausgabestrom in der eingestellten Ausgabefähigkeitsnachricht des Ladegeräts (20) ein voreingestellter Strom ist; und
Senden, durch das Kommunikationsmodul (11) einer Ladestoppnachricht an das Fahrzeug (30), wenn die Temperaturdaten größer als der zweite Schwellenwert sind.

6. Steuereinrichtung für den Adapter nach Anspruch 1, wobei die Steuereinrichtung (10) weiter ein Stromversorgungsmodul umfasst, das dazu konfiguriert ist, das Kommunikationsmodul (11) und das Steuerungsmodul (12) mit Strom zu versorgen.

7. Verfahren zum Steuern eines Adapters, das Folgendes umfasst:
Empfangen einer Ausgabefähigkeitsnachricht eines Ladegeräts (20);
Parsen und Erheben eines Ausgabestrombereichs des Ladegeräts (20) in der Nachricht; und
Bestimmen und Senden einer entsprechenden Nachricht an ein Fahrzeug (30) basierend auf einem Nennstrom des Adapters (40) und dem Ausgabestrombereich derart, dass das Fahrzeug (30) eine Rückmeldenachricht an das Ladegerät (20) basierend auf der empfangenen Nachricht und einem eigenen Konfigurationsparameter sendet, wobei die Rückmeldenachricht eine Ausgabestromnachricht ist, die von dem Batterieverwaltungssystem des Fahrzeugs (30) an das Ladegerät (20) gesendet wird,
**dadurch gekennzeichnet, dass**
der Ausgabestrombereich Folgendes umfasst: einen Mindestausgabestrom und einen Höchstausgabestrom;
wobei das Bestimmen und Senden einer entsprechenden Nachricht an das Fahrzeug (30) basierend auf dem Nennstrom des Adapters (40) und dem Ausgabestrombereich Folgendes umfasst:
Senden einer Ladestoppnachricht an das Fahrzeug (30), wenn der Nennstrom kleiner als der Mindestausgabestrom ist; und
Einstellen der Ausgabefähigkeitsnachricht des Ladegeräts (20), wenn der Nennstrom kleiner als der Höchstausgabestrom und größer als der Mindestausgabestrom ist, und Senden der eingestellten Ausgabefähigkeitsnachricht des Ladegeräts (20) an das Fahrzeug (30), wobei der Höchstausgabestrom in der eingestellten Ausgabefähigkeitsnachricht des Ladegeräts (20) den Nennstrom nicht überschreitet.

8. Verfahren zum Steuern des Adapters nach Anspruch 7, das weiter das Folgendes umfasst:
Erheben von Temperaturdaten eines Adapteranschlusses in Echtzeit;
Einstellen der Ausgabefähigkeitsnachricht des Ladegeräts (20), wenn die Temperaturdaten zwischen einem ersten und einem zweiten Schwellenwert liegen, und Senden der eingestellten Ausgabefähigkeitsnachricht des Ladegeräts (20) an das Fahrzeug (30), wobei der Höchstausgabestrom in der eingestellten Ausgabefähigkeitsnachricht des Ladegeräts (20) ein voreingestellter Strom ist, und der erste Schwellenwert kleiner als der zweite Schwellenwert ist; und
Senden einer Ladestoppnachricht an das Fahrzeug (30), wenn die Temperaturdaten größer sind als der zweite Schwellenwert.

9. Adapter, der Folgendes umfasst: die Steuereinrichtung (10) für den Adapter (40) nach einem der Ansprüche 1 bis 6 und eine Stromumrichtungsvorrichtung.

10. Ladesystem, das Folgendes umfasst: die Steuereinrichtung (10) für den Adapter (40) nach einem der Ansprüche 1 bis 6, ein Ladegerät (20), ein Fahrzeug (30) und einen Adapter (40).

## Revendications

1. Appareil de commande pour un adaptateur, comprenant : un module de communication (11) et un module de commande (12) ;
le module de communication (11) est configuré pour transmettre un message entre un chargeur (20) et un véhicule (30) ; et
le module de commande (12) est configuré pour analyser et acquérir une plage de courant de sortie du chargeur (20) lors de la réception d'un message de capacité de sortie du chargeur (20) envoyé par ledit chargeur (20), et envoyer un message correspondant au véhicule (30) en fonction du courant nominal d'un adaptateur (40) et de la plage de courant de sortie, afin que le véhicule (30) envoie un message de retour au chargeur (20) en fonction du message reçu et d'un paramètre de configuration propre, dans lequel le message de retour est un message de courant de sortie envoyé par le système de gestion de la batterie du véhicule (30) au chargeur (20),
**caractérisé en ce que**
la plage de courant de sortie comprend : un courant de sortie minimum et un courant de sortie maximum ;
dans lequel l'envoi d'un message correspondant au véhicule (30) en fonction du courant nominal d'un adaptateur (40) et de la plage de courant de sortie comprend :
l'envoi, par le module de communication (11), d'un message d'arrêt de charge au véhicule (30), lorsque le courant nominal est inférieur au courant de sortie minimal ; et
l'ajustement du message de capacité de sortie du chargeur (20), lorsque le courant nominal est inférieur au courant de sortie maximal et supérieur au courant de sortie minimal, et l'envoi, par le module de communication (11), du message de capacité de sortie ajusté du chargeur (20) au véhicule (30), dans lequel le courant de sortie maximal dans le message de capacité de sortie ajusté du chargeur (20) ne dépasse pas le courant nominal.

2. Appareil de commande de l'adaptateur selon la revendication 1, dans lequel le module de communication (11) comprend : une première unité de communication (111) et une deuxième unité de communication (112) ;
la première unité de communication (111) est connectée électriquement au chargeur (20) et est configurée pour recevoir des informations de message transmises par le chargeur (20) et envoyer les informations de message au module de commande (12) ;
le module de commande (12) est également configuré pour déterminer si les informations du message sont le message de capacité de sortie du chargeur (20) ;
si tel est le cas, effectuer l'analyse des informations du message et les étapes suivantes, et envoyer, par la deuxième unité de communication (112), un message correspondant au véhicule (30) ; et
sinon, envoyer, par la deuxième unité de communication (112), les informations du message reçu au véhicule (30).

3. Appareil de commande de l'adaptateur selon la revendication 1, dans lequel l'appareil de commande est monté sur un adaptateur (40).

4. Appareil de commande de l'adaptateur selon la revendication 1, dans lequel, lorsque l'appareil de commande (10) est monté sur l'adaptateur (40), ledit appareil de commande (10) comprend en outre un module de détection de température (13) ;
le module de détection de température (13) est configuré pour collecter la température de fonctionnement d'une borne d'adaptateur et envoyer les données de température collectées au module de commande (12) ; et
le module de commande (12) est également configuré pour comparer les données de température avec une valeur seuil prédéfinie et envoyer un message correspondant au véhicule (30) sur la base d'un résultat de comparaison.

5. Appareil de commande de l'adaptateur selon la revendication 4, dans lequel la valeur de seuil préréglée comprend : une première valeur de seuil et une deuxième valeur de seuil, et la première valeur de seuil est inférieure à la deuxième valeur de seuil ;
l'envoi d'un message correspondant au véhicule (30) sur la base d'un résultat de comparaison comprend :
l'ajustement du message de capacité de sortie du chargeur (20), lorsque les données de température se situent entre la première et la deuxième valeur de seuil, et l'envoi, par le module de communication (11), du message de capacité de sortie ajusté du chargeur (20) au véhicule (30), dans lequel le courant de sortie maximal dans le message de capacité de sortie ajusté du chargeur (20) est un courant prédéfini ; et
l'envoi, par le module de communication (11), d'un message d'arrêt de charge au véhicule (30), lorsque les données de température sont supérieures à la deuxième valeur de seuil.

6. Appareil de commande de l'adaptateur selon la revendication 1, dans lequel l'appareil de commande (10) comprend en outre un module d'alimentation configuré pour alimenter le module de communication (11) et le module de commande (12).

7. Procédé de commande d'un adaptateur, comprenant :
la réception d'un message de capacité de sortie d'un chargeur (20) ;
l'analyse et l'acquisition de la plage de courant de sortie du chargeur (20) dans le message ; et
la détermination et l'envoi d'un message correspondant à un véhicule (30), en fonction du courant nominal de l'adaptateur (40) et de la plage de courant de sortie, afin que le véhicule (30) envoie un message de retour au chargeur (20) en fonction du message reçu et d'un paramètre de configuration propre, dans lequel le message de retour est un message de courant de sortie envoyé par le système de gestion de la batterie du véhicule (30) au chargeur (20),
**caractérisé en ce que**
la plage de courant de sortie comprend : un courant de sortie minimum et un courant de sortie maximum ;
dans lequel la détermination et l'envoi d'un message correspondant au véhicule (30) en fonction du courant nominal de l'adaptateur (40) et de la plage de courant de sortie comprennent :
l'envoi d'un message d'arrêt de charge au véhicule (30), lorsque le courant nominal est inférieur au courant de sortie minimal ; et
l'ajustement du message de capacité de sortie du chargeur (20), lorsque le courant nominal est inférieur au courant de sortie maximal et supérieur au courant de sortie minimal, et l'envoi du message de capacité de sortie ajusté du chargeur (20) au véhicule (30), dans lequel le courant de sortie maximal dans le message de capacité de sortie ajusté du chargeur (20) ne dépasse pas le courant nominal.

8. Procédé de commande de l'adaptateur selon la revendication 7, comprenant en outre :
l'acquisition en temps réel des données de température d'un terminal adaptateur ;
l'ajustement du message de capacité de sortie du chargeur (20), lorsque les données de température se situent entre une première et une deuxième valeur de seuil, et l'envoi du message de capacité de sortie ajusté du chargeur (20) au véhicule (30), dans lequel le courant de sortie maximal dans le message de capacité de sortie ajusté du chargeur (20) est un courant prédéfini, et la première valeur de seuil est inférieure à la deuxième valeur seuil ; et
l'envoi d'un message d'arrêt de charge au véhicule (30), lorsque les données de température sont supérieures à la deuxième valeur de seuil.

9. Adaptateur comprenant : l'appareil de commande (10) pour l'adaptateur (40) selon l'une quelconque des revendications 1 à 6 et un dispositif de conversion de courant.

10. Système de charge, comprenant : l'appareil de commande (10) pour l'adaptateur (40) selon l'une quelconque des revendications 1 à 6, un chargeur (20), un véhicule (30) et un adaptateur (40).
